# EUROPEAN PATENT SPECIFICATION

(11) **EP 1 997 211 B1**
(45) Date of publication and mention of the grant of the patent: **10.06.2015**
(21) Application number: 07726983.5
(22) Date of filing: 16.03.2007
(51) Int. Cl.: H02K 11/00, H02K 29/08

(54) **AN ELECTRIC MOTOR**
ELEKTROMOTOR
MOTEUR ELECTRIQUE

(30) Priority: 17.03.2006 TR 200601258
(43) Date of publication of application: 03.12.2008
(73) Proprietor: ARCELIK ANONIM SIRKETI, 34950 Istanbul (TR)
(72) Inventor: TURK, Reyhan, 34950 Istanbul (TR); FIRAT, Asuman, 34950 Istanbul (TR); DIRIL, Orhan, 34950 Istanbul (TR); YILMAZ, Namik, 34950 Istanbul (TR); ERENAY, Kerem, 34950 Istanbul (TR)
(86) International application number: PCT/EP2007/052504
(87) International publication number: WO 2007/107513

(56) References cited:
- EP-A- 1 351 376
- EP-A1- 1 351 375
- EP-A2- 0 574 823
- EP-A2- 0 682 404
- DE-A1- 4 407 850
- DE-A1- 19 533 076
- US-A1- 2001 043 806

## Description

The present invention relates to a single phase synchronous electric motor that is provided to rotate in a single direction at the start up.

The single phase synchronous motors that are used in a lot of domains like household appliances are composed of a stator comprising pole windings and a permanent magnet rotor that rotates relative to the frequency of the current applied to the windings. The rotor and stator are generally bi-polar in this type of electric motors. The air gap between the stator and the rotor having an asymmetrical structure and by means of an angle between the rotor polar axis and the stator polar axis at the deenergized condition, the motor starts up without the need for an additional device, rotating randomly clockwise or counterclockwise. In a lot of implementations, the single phase synchronous motor is desired to start up in a certain direction and to carry on its rotation in a stable manner. When the motor is desired to start up in a determined direction, special mechanical or electronic devices are required. The motor coil is fed by a switch by following up the rotor position, power supply polarity, and the winding current in order for the motor to start up in a fixed direction. The solutions that aim a start up in a fixed direction are derived from the assumption that the rotor rests at the predetermined-desired position while de-energized. It is assumed that the rotor is at the appropriate "parking" position at every stop. If the rotor has parked at a different position from the expected one, then the problem of the motor start up arises.

In the European patent document no. EP1351375, a synchronous motor is described wherein the problems of the start up are minimized. The explanation is given as to how the phase shift between the power supply that provides rotation of the rotor and the stator coil current is provided by arranging the sensor suitably, without the requirement of another electronic circuit.

In the patent documents no. EP0575823 and US5675226, the triac power source used in the start up circuit of the synchronous motor is connected in series with the stator winding, the data like rotor polarity of the winding current and the polarity of the alternating supply voltage are recorded to control the triac. The rotor position is determined by a position sensor.

In the European patent document no. EP0909013, a single-phase synchronous the stator winding is provided with voltage pulses of gradually increasing intensity to magnetically saturate the stator and the motor is driven to reach a synchronous speed. The voltage inducted by the rotor is measured to detect the rotor position and rotor speed and a rotor position sensor is not utilized.

EP 682404 discloses a motor according to the preamble of claim 1.

The aim of the present invention is the realization of a single phase synchronous electric motor that is enabled to rotate in one direction with a simple and low cost mechanism by controlling the position of the rotor.

The electric motor realized in order to attain the aim of the present invention is explicated in the attached claims.

The single phase synchronous electric motor comprises a U shaped stator and a bipolar (N, S) permanent magnet rotor, situated between the pole projections of the stator and when the current supplied to the stator is cut off and the rotor is motionless, is aligned with a parking angle (θ) formed in between the rotor polar axis and the stator polar axis due to the asymmetrical air gap between the rotor and the stator and is expected to stop at a predetermined parking angle (θ=θ1) under normal conditions.

In the electric motor of the present invention, if alignment is not achieved in the determined parking angle (θ,θ1) due to any reason like the rotor locking etc. two position sensors are used to detect this condition.

The position sensors are situated around the rotor with a certain angle (α) in between that is smaller than 180 degrees, preferably between 170 - 180 degrees. If the rotor is aligned in the correct parking angle, both of the position sensors show the N pole or the S pole. If the rotor is not aligned in the correct parking angle, then while one of the position sensors shows the N pole, the other shows the S pole.

If the rotor is detected to be aligned in the determined parking angle (θ = θ1) by the position sensors, only positive half waves or only negative half waves are applied to the motor at the initial start up according to the pole sign (N, S) detected by the position sensors so that the rotor rotates in the desired direction.

If the rotor is detected not to be aligned in the determined parking angle (θ ≠ θ1) by the position sensors, then the appropriate polarity voltage, for example positive voltage half waves are applied according to the pole sign received from the position sensors so that the rotor is aligned in the determined parking angle (θ1), if the rotor is still detected to be in the undesired parking angle (θ ≠ θ1) after the alignment, then the reverse direction for example negative voltage half waves are applied.

After the electric motor is started up by supplying current, the difference in the control signs (N or S) of the position sensors with respect to time and their relative arrangement is monitored and whether the rotor is rotating in the desired direction or not while in continuous rotation and its speed are ascertained.

If the rotation direction of the rotor is detected not to be the desired rotational direction and the synchronized speed is not attained, then the motor is stopped, the rotor is aligned to the determined parking angle (θ1) and is started up again.

The electric motor of the present invention is utilized in actuating the circulation or discharge pumps that are operated efficiently when rotating in a certain direction, e.g. in dishwashers or washing machines.

The electric motor realized in order to attain the aim of the present invention is illustrated in the attached figures, where:
Figure 1 - is the schematic view of an electric motor with its rotor in the predetermined parking position.
Figure 2 - is the schematic view of an electric motor with its rotor not in the predetermined parking position.
Figure 3 - is the schematic view of an electric motor with its rotor rotating in the counterclockwise direction and the signs detected by the position sensors.
Figure 4 - is the schematic view of an electric motor with its rotor rotating in the clockwise direction and the signs detected by the position sensors.

The elements illustrated in the figures are numbered as follows:
1. Electric motor
2. Stator
3. Rotor
4. 104, Position sensor
5. Air gap

The single phase synchronous electric motor (1) comprises a stator (2) having two pole projections and a winding, a bipolar (N-S) permanent magnet rotor (3) situated between the pole projections of the stator (2), and an air gap (5) having an asymmetrical structure between the rotor (3) and the stator (2), providing the rotor (3) to start up when current is supplied to the stator (2) windings.

In the single phase synchronous electric motor (1), a rotor polar axis (E1) passes through the rotor (3) poles (N-S).

The polar separation axis (E2) that separates the N and S poles of the rotor (3) is perpendicular to the rotor polar axis (E1).

A stator polar axis (E3) passes through the stator (2) pole projections.

When the rotor (3) is motionless, a parking angle (θ) is formed between the rotor polar axis (E1) and the stator polar axis (E3) due to the air gap (5) being of an asymmetrical configuration. The parking angle (θ) is determined by the asymmetrical configuration of the air gap (5) and is a necessary positioning angle for the start up of the rotor (3) when current is supplied to the stator (2) windings.

When the rotor (3) is motionless, it is expected to align with a predetermined parking angle (θ = θ1) in between the rotor polar axis (E1) and the stator polar axis (E3) under normal operational conditions.

The electric motor (1) of the present invention comprises two position sensors (4, 104), that control whether or not the rotor (3) is aligned at the predetermined parking angle (θ1), situated around the rotor (3) when the rotor (3) stops at the predetermined parking angle (θ1) such that it stays on one side of the rotor (3) pole separating axis (E2), and each one senses the same rotor (3) pole (N-N or S-S) if the rotor (3) is aligned at the determined parking angle (θ=θ1), if not aligned at the determined parking angle (θ ≠ θ1), then each one senses a different rotor (3) pole (N-S) or (S-N).

The position sensors (4, 104) are preferably attached on the rotor (3) casing inside which the rotor (3) operates.

A Hall sensor is preferred as the position sensor (4, 104), providing to detect the magnetic changes and transmitting by converting into an electric parameter like a voltage.

The position sensors (4, 104) are positioned such that there is a certain angle (α) in between them with respect to the center of the rotor (3). The angle (α) between the position sensors (4, 104) is smaller than 180 degrees, preferably between 170-180 degrees.

The position sensors (4, 104) are furthermore preferred to be positioned symmetrically on each side of the rotor polar axis (E1) when the rotor (3) stops at the determined parking angle (θ1).

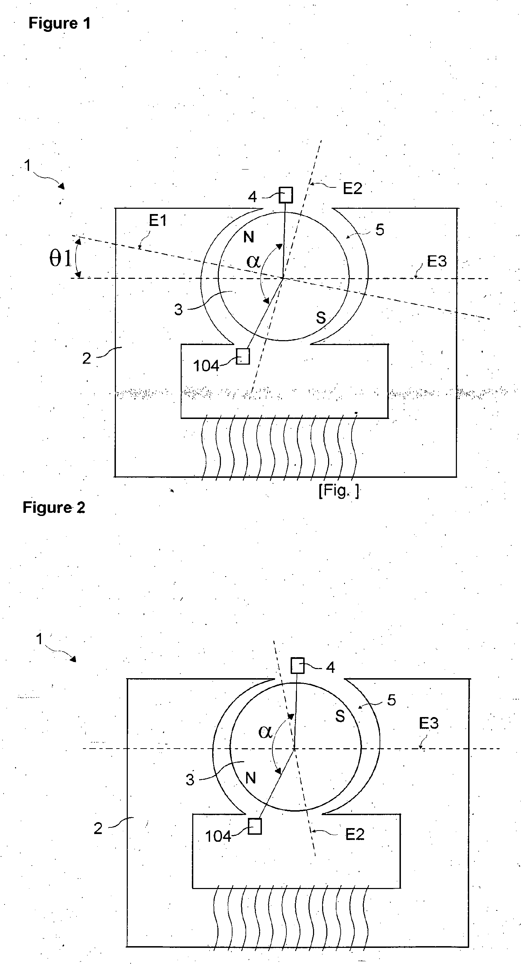

At the parking angle (θ = θ1) determined when the rotor (3) is motionless, both of the position sensors (4, 104) show the N pole or the S pole (Figure 1).

If the rotor (3) does not stop at the determined parking angle (θ ≠ θ1) while motionless, due to abnormal conditions like unsuitable load or electrical parameters or rotor locking, then one position sensor (104) shows the N pole while the other position sensor (4) shows the S pole (Figure 2).

As the angle (α) between the position sensors (4, 104) nears 180 degrees, the sensitivity of the position sensors (4, 104) increases in detecting whether or not the rotor (3) stops at the determined parking angle (θ1). For example, when the angle (α) between the two position sensors (4, 104) is 179 degrees and if the rotor (3) has diverted from the determined parking angle (θ1) by only two degrees, one of the position sensors (4, 104) show the N pole, while the other shows the S pole and the rotor (3) is detected to stop at the undesired parking angle (θ ≠ θ1).

If the rotor (3) is detected to be aligned in the determined parking angle (θ = θ1) by the position sensors (4, 104), either only positive half Waves or only negative half waves are applied on the stator (2) windings according to the pole sign (N,S) received from the position sensors (4, 104) in order for the rotor (3) to rotate in the desired direction at the initial start up. For example if both of the two position sensors (4, 104) detect the N pole and if the rotor (3) is desired to rotate clockwise, then the positive half wave of the power supply voltage is applied. When both of the two position sensors (4, 104) detect the S pole, then the negative half wave of the power supply voltage is applied at the initial start up.

If the rotor (3) is detected not to be aligned in the determined parking angle (θ ≠ θ1) by the position sensors (4, 104), then the rotor (3) is first aligned in the determined parking angle (θ1) so that the rotor (3) rotates in the desired direction at the initial start up. The voltage half waves of suitable polarity according to the sign received from the position sensors (4, 104) are applied on the stator (2) windings for a short while so that the rotor (3) is aligned in the determined parking angle (θ1). If the rotor (3) is still detected to be in the undesired parking angle (θ ≠ θ1) after the alignment process, this time voltage that has the reverse polarity of the formerly supplied voltage is applied on the stator (2) windings. For example if one position sensor (4) detects the S pole and the other position sensor (104) detects the N pole, the rotor (3) is aligned by applying only the negative half waves of the voltage on the stator (2) windings and if the rotor (3) is detected not to be aligned, then only the positive half waves of the voltage is applied on the stator (2) windings.

In the electric motor (1) of the present invention the position sensors (4, 104) are also used for detecting whether or not the rotor (3) is rotating in the suitable direction.

In this embodiment, since there is an angle α between the two position sensors (4, 104), and since any point on the rotor (3) after passing from one position sensor (4) will pass from the other position sensor (104) with a phase difference of angle α with respect to the rotational direction of the rotor (3), the rotor (3) is detected whether or not it is rotating in the desired direction by monitoring the change in the control signs (N or S) of the position sensors (4, 104) with respect to time

The position sensors (4, 104) successively detect the N or S poles on the rotor (3) with a phase difference of angle α between them during the rotation of the rotor (3) in any direction and the rotational direction of the rotor (3) is ascertained by determining which one of the position sensors (4, 104) has detected any one pole earlier or later.

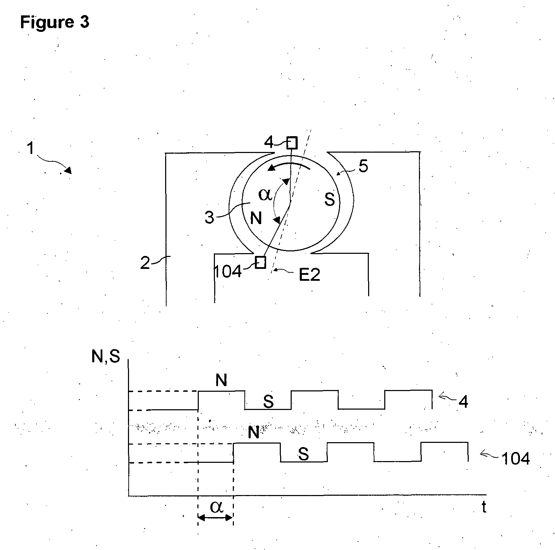

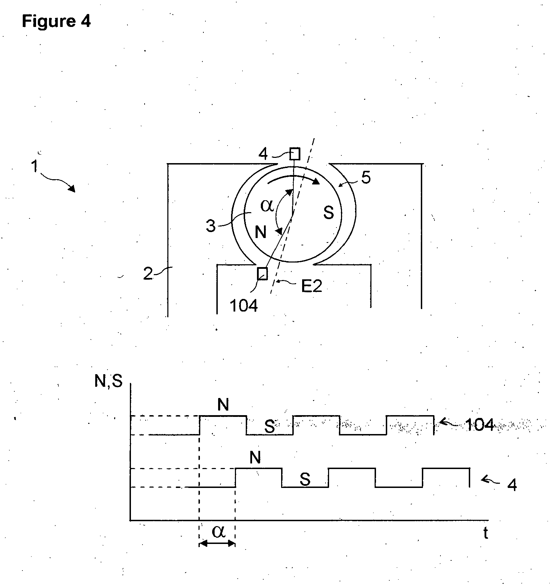

For example, if the N pole is detected earlier by a position sensor (4) and later by the other position sensor (104) with a phase difference of angle (α), then the rotational direction is determined to be counterclockwise (Figure 3). Likewise if the N pole is detected earlier by a position sensor (104) and later by the other position sensor (4) with a phase difference of angle α, then the rotational direction is determined to be clockwise (Figure 4).

If the rotational direction of the rotor (3) is detected not to be the desired direction, the electric motor (1) is stopped, alignment process is applied to the rotor (3) while motionless, bringing to the determined parking angle (θ = θ1) and the rotor (3) is again started up in the desired direction by applying voltage with the suitable polarity on the stator (2) windings.

In another embodiment of the present invention, the speed data of the rotor (3) is obtained by monitoring the change in the control signs (N or S) of the position sensors (4, 104) with respect to time. If the speed of the rotor (3) is greater than the required synchronized speed, then it is decided that the rotor (3) is not rotating in the desired direction and the electric motor (1) is stopped to repeat the said alignment and start up processes.

In the single phase permanent magnet electric motor (1) of the present invention, whether or not the rotor (3) is in the determined parking angle (θ1) while motionless, is controlled by the position sensors (4, 104), if it is not in the determined parking angle (θ ≠ 01), the rotor (3) is aligned to resume this parking angle (θ = θ1), the rotor (3) is made to start up in the desired direction and if the rotor (3) is still rotating in the undesired direction, it is stopped to provide the rotation in the desired direction. The electric motor (1) is utilized in actuation of the circulation or the discharge pumps that are operated efficiently when rotating in a certain direction, for example in dishwashers or washing machines.

## Claims

1. A single phase synchronous electric motor (1) comprising a stator (2) having two pole projections and a winding and a bipolar (N-S) permanent magnet rotor (3) situated between the pole projections of the stator (2), wherein an air gap between the stator (2) and the rotor (3) has an asymmetrical structure, and further comprising two position sensors (4, 104), situated around the rotor (3), and **characterized in that** a normal condition is defined under which the rotor (3), when a current supplied to the stator (2) is cut off, is motionless and stops at a predetermined parking angle (θ = θ1), wherein the two position sensors (4, 104) are situated such as to be disposed on one side of the rotor (3) pole separating axis (E2) when the rotor (3) stops at the predetermined parking angle (θ1), and **in that** if the rotor (3) is aligned at the predetermined parking angle (θ = θ1), each position sensor (4, 104) detects the same rotor (3) pole (N-N or S-S), and the rotor (3) is thus detected to be aligned in the predetermined parking angle (θ = θ1), and **in that** if the rotor is not aligned at the determined parking angle (θ ≠ θ1), each position sensor (4, 104) detects a different rotor (3) pole (N-S or S-N) and the rotor (3) is thus detected not to be aligned in the predetermined parking angle (θ ≠ θ1)

2. An electric motor (1) as in Claim 1, **characterized by** two position sensors (4, 104) having an angle (α) smaller than 180 degrees in between with respect to the center of the rotor (3).

3. An electric motor (1) as in Claim 1 or 2, **characterized by** position sensors (4, 104) positioned symmetrically on each side of the rotor (3) polar axis (E1) when the rotor (3) stops at the determined parking angle (θ1).

4. An electric motor (1) as in any one of the above claims, **characterized by** a stator (2) to which only positive half waves or only negative half waves are applied on its windings according to the pole sign (N,S) received from the position sensors (4, 104) so that the rotor (3) rotates in the desired direction at the initial start up, if the rotor (3) is detected to be aligned with the determined parking angle (θ = θ1).

5. An electric motor (1) as in any one of the claims 1 to 3, **characterized by** a stator (2) to which voltage of suitable polarity is applied according to the sign received from the position sensors (4, 104) in order to align the rotor (3) with the determined parking angle (θ1) if the rotor (3) is detected not to be aligned in the determined parking angle (θ ≠ θ1) by the position sensors (4, 104), and if the rotor (3) is still detected to be in the undesired parking angle (θ ≠ θ1) after the alignment process, this time voltage that has the reverse polarity of the formerly supplied voltage is applied.

6. An electric motor (1) as in any one of the above claims, **characterized by** a rotor (3) which is detected whether or not it rotates in the desired direction after start up by monitoring the change in the control signs (N or S) of the position sensors (4, 104) with respect to time and their positions relative to each other.

7. An electric motor (1) as in Claim 6, **characterized by** a rotor (3) which is stopped when detected not to rotate in the desired direction, aligned to the determined parking angle (θ1) and restarted up in the desired direction by applying a voltage of suitable polarity on the stator (2) windings.

8. An electric motor (1) as in Claim 6 or 7, **characterized by** a rotor (3) about which the speed data is obtained by monitoring the change in the control signs (N or S) of the position sensors (4, 104) with respect to time, and if the speed is different from the required synchronous speed, it is decided that the rotation is in the undesired direction and is stopped to repeat the alignment and start up processes.

## Patentansprüche

1. Elektrischer Einzelphasensynchronmotor (1), umfassend einen Stator (2) mit zwei Polvorsprüngen und einer Wicklung und einen bipolaren (N-S) Dauermagnetrotor (3), der zwischen den Polvorsprüngen des Stators (2) angeordnet ist, wobei ein Luftspalt zwischen dem Stator (2) und dem Rotor (3) eine asymmetrische Struktur aufweist, und ferner umfassend zwei Positionssensoren (4, 104), die um den Rotor (3) herum angeordnet sind, **dadurch gekennzeichnet, dass** ein Normalzustand definiert ist, in dem der Rotor (3), wenn eine Stromversorgung des Stators (2) unterbrochen wird, bewegungslos ist und in einem vorgegebenen anhält Haltewinkel (θ = θ1), wobei die zwei Positionssensoren (4, 104) derart angeordnet sind, dass sie auf einer Seite der Poltrennungsachse (E2) des Rotors (3) liegen, wenn der Rotor (3) in dem vorgegebenen Haltewinkel (θ1) anhält, und **dadurch dass,** wenn der Rotor (3) in dem vorgegebenen Haltewinkel ausgerichtet ist (θ = θ1), jeder Positionssensor (4, 104) denselben Pol (N-N oder S-S) des Rotors (3) erkennt, wodurch erkannt wird, dass der Rotor (3) in dem vorgegebenen ausgerichtet ist Haltewinkel (θ = θ1), und **dadurch, dass,** wenn der Rotor nicht in dem vorgegebenen Haltewinkel ausgerichtet ist (θ ≠ θ1), jeder Positionssensor (4, 104) einen anderen Pol (N-N oder S-S) des Rotors (3) erkennt, wodurch erkannt wird, dass der Rotor (3) nicht in dem vorgegebenen Haltewinkel (θ ≠ θ1) ausgerichtet ist.

2. Elektrischer Motor (1) nach Anspruch 1, **dadurch gekennzeichnet, dass** die zwei Positionssensoren (4, 104) einen Winkel (α) von kleiner als 180 Grad in Bezug auf die Mitte des Rotors (3) dazwischen aufweisen.

3. Elektrischer Motor (1) nach Anspruch 1 oder 2, **dadurch gekennzeichnet, dass** die zwei Positionssensoren (4, 104) symmetrisch auf jeder Seite der Polachse (E1) des Rotors (3) angeordnet sind, wenn der Rotor (3) in dem vorgegebenen Haltewinkel (θ1) anhält.

4. Elektrischer Motor (1) nach einem der vorangehenden Ansprüche, **gekennzeichnet durch** einen Stator (2), an dessen Wicklungen entsprechend dem Polzeichen (N, S), das von den Positionssensoren (4, 104) empfangen wird, nur positive Halbwellen oder negative Halbwellen angelegt werden, derart, dass der Rotor (3) sich beim Starten in der gewünschten Richtung dreht, wenn erkannt wird, dass der Rotor (3) an dem vorgegebenen Haltewinkel (θ = θ1) ausgerichtet ist.

5. Elektrischer Motor (1) nach einem der Ansprüche 1 bis 3, **gekennzeichnet durch** einen Stator (2), an den entsprechend, das von den Positionssensoren (4, 104) empfangen wird, eine Spannung geeigneter Polarität angelegt wird, um den Rotor (3) an dem vorgegebenen Haltewinkel (θ1) auszurichten, wenn von den Positionssensoren (4, 104) erkannt wird, dass der Rotor (3) nicht in dem vorgegebenen Haltewinkel ausgerichtet ist (θ ≠ θ1), und wenn nach dem Ausrichtungsvorgang weiterhin erkannt wird, dass der Rotr (3) in dem nicht gewünschten Haltewinkel (θ ≠ θ1) ist, die Spannung mit umgekehrter Polarität zur bis dahin angelegten Spannung angelegt wird.

6. Elektrischer Motor (1) nach einem der vorangehenden Ansprüche, **gekennzeichnet durch** einen Rotor (3), für den erkannt wird, ob er sich nach dem Start in die gewünschte Richtung dreht oder nicht, indem die Änderung der Steuerzeichen (N oder S) der Positionssensoren (4, 104) in Bezug auf die Zeit und ihre relative Position zueinander überwacht wird.

7. Elektrischer Motor (1) nach Anspruch 6, **gekennzeichnet durch** einen Rotor (3) der, wenn erkannt wird, dass er sich nicht in die gewünschte Richtung dreht, angehalten, im vorgegebenen Haltewinkel (θ1) ausgerichtet und in der gewünschten Richtung neu gestartet wird, indem eine Spannung geeigneter Polarität an die Wicklungen des Stators (2) angelegt wird.

8. Elektrischer Motor (1) nach Anspruch 6 oder 7, **gekennzeichnet durch** einen Rotor (3), über den Drehzahldaten erlangt werden, indem die Änderung der Steuerzeichen (N oder S) der Positionssensoren (4, 104) in Bezug auf die Zeit überwacht werden, und der, wenn die Drehzahl von der erforderlichen Synchrondrehzahl abweicht und bestimmt wird, dass die Drehung in die nicht gewünschte Richtung erfolgt, angehalten wird, um den Ausrichtungs- und den Startvorgang zu wiederholen.

## Revendications

1. Un moteur électrique monophasé synchrone (1) **comprenant** un stator (2) qui présente deux protubérances de pôle et un enroulement et un rotor bipolaire (N-S) à aimant permanent (3) situé entre les protubérances de pôle du stator (2), où un entrefer entre le stator (2) et le rotor (3) présente une structure asymétrique, et comprenant en outre deux capteurs de position (4, 104) situés autour du rotor (3), et **caractérisé en ce qu'**une condition normale est définie où le rotor (3), lorsque un courant fournie au stator (2) est coupé, est immobile et s'arrête à un angle de stationnement prédéterminé (θ = θ1), où les deux capteurs de position (4, 104) sont situés de manière à être disposés sur un côté de l'axe (E2) séparant du pôle du rotor (3) lorsque le rotor (3) s'arrête à l'angle de stationnement prédéterminé (θ1), et **en ce que** si le rotor (3) est aligné a l'angle de stationnement prédéterminé (θ = θ1), chaque capteur de position (4, 104) détecte le même pôle (N-N ou S-S) du rotor (3), et le rotor (3) est donc détectée comme aligné à l'angle de stationnement prédéterminé (θ = θ1), et **en ce que** si le rotor n'est pas aligné à l'angle de stationnement prédéterminé (θ ≠ θ1), chaque capteur de position (4, 104) détecte un pôle (N-S ou S-N) différent du rotor (3) et le rotor (3) est donc détecté comme ne pas aligné à l'angle de stationnement prédéterminé (θ ≠ θ1).

2. Un moteur électrique (1) selon la Revendication 1, **caractérisé par** deux capteurs de position (4, 104) qui présentent un angle (α) inférieur à 180 degrés entre les deux par rapport au centre du rotor (3).

3. Un moteur électrique (1) selon la Revendication 1 ou 2, **caractérisé par** les capteurs de position (4, 104) qui sont positionnés symétriquement à chaque côté de l'axe (E1) polaire du rotor (3) lorsque le rotor (3) s'arrête à l'angle de positionnement prédéterminé (θ1).

4. Un moteur électrique (1) selon l'une quelconque des revendications précédentes, **caractérisé par** un stator (2) auquel seulement des demi-ondes positives ou seulement des demi-ondes négatives sont appliquées sur ses enroulements en fonction du signe de pôle (N, S) reçu des capteurs de position (4, 104) de telle sorte que le rotor (3) tourne dans le sens souhaité au démarrage initial, si le rotor (3) est détecté comme aligné à l'angle de stationnement prédéterminé (θ = θ1).

5. Un moteur électrique (1) selon l'une quelconque des revendications 1 à 3, **caractérisé par** un stator (2) auquel une tension à polarité appropriée est appliquée en fonction du signe reçu des capteurs de position (4, 104) afin d'aligner le rotor (3) avec l'angle de stationnement prédéterminé (θ1) si le rotor (3) est détecté comme ne pas aligné à l'angle de stationnement prédéterminé (θ ≠ θ1) par les capteurs de position (4, 104), et si le rotor (3) est encore détecté comme étant à l'angle de stationnement indésirable (θ ≠ θ1) après le processus d'alignement, cette fois-ci une tension qui présente la polarité contraire de la tension fournie précédemment est appliquée.

6. Un moteur électrique (1) selon l'une quelconque des revendications précédentes, **caractérisé par** un rotor (3) qui est détecté si ou non il tourne dans le sens souhaité après le démarrage en surveillant le changement dans les signes (N ou S) de contrôle des capteurs de position (4, 104) par rapport au temps et à leurs positions respectives.

7. Un moteur électrique (1) selon la Revendication 6, **caractérisé par** un rotor (3) qui est arrêté lorsqu'il est détecté qu'il ne tourne pas dans le sens souhaité, qui est aligné à l'angle de stationnement prédéterminé (θ1) et redémarré dans le sens souhaité en appliquant une tension à polarité appropriée sur les enroulements du stator (2).

8. Un moteur électrique (1) selon la Revendication 6 ou 7, **caractérisé par** un rotor (3) dont les données de vitesse sont obtenues en surveillant le changement dans les signes (N ou S) de contrôle des capteurs de position (4, 104) par rapport au temps, et si la vitesse est différente de la vitesse synchrone nécessaire, il est décidé que la rotation est dans le sens indésirable et est arrêté afin de répéter les processus de l'alignement et de démarrage.
